(19) Europäisches Patentamt
European Patent Office
Office européen des brevets

(11) Publication number: **0 377 746 A1**

(12) # EUROPEAN PATENT APPLICATION published in accordance with Art. 158(3) EPC

(21) Application number: **89905755.8**

(51) Int. Cl.5: **B60S 1/54**

(22) Date of filing: **10.05.89**

(86) International application number:
**PCT/JP89/00477**

(87) International publication number:
**WO 89/10860 (16.11.89 89/27)**

(30) Priority: **10.05.88 JP 61557/88 U**
**04.04.89 JP 185286/89**

(43) Date of publication of application:
**18.07.90 Bulletin 90/29**

(84) Designated Contracting States:
**AT BE CH DE FR GB IT LI LU NL SE**

(71) Applicant: **KASAHARA, Sigeyuki**
**58, Aza Kaminaruyama, Iwadeyamacho shimonome**
**Tamatsukuri-gun, Miyagi 989-64(JP)**

(72) Inventor: **KASAHARA, Sigeyuki**
**58, Aza Kaminaruyama, Iwadeyamacho shimonome**
**Tamatsukuri-gun, Miyagi 989-64(JP)**

(74) Representative: **Tomlinson, Kerry John et al**
**Frank B. Dehn & Co. European Patent Attorneys Imperial House 15-19 Kingsway London WC2B 6UZ(GB)**

(54) **LAMINAR JET FLOW TYPE WINDOW WASHER.**

(57) This invention relates to a window washer for securing visibility through a window of a vehicle at the time of rainfall, snowfall, a storm wind, and the like. The window washer comprises compressed air jet nozzles (2), (2') for jetting compressed air streams in substantially parallel with the window surface (1) with a predetermined gap between them and forming compressed jet flow layers (4), (4'), in a plurality of stages and a secondary air jet nozzle or an external air introduction air jet port (3) for forming a secondary air layer (6) by jetting low velocity air from the compressed jet flow layers (4), (4') while being interposed between the compressed air jet nozzles (2), (2'). In this case, at least one compressed jet flow layer of compressed air to be jetted may carry hot air.

Fig. 2

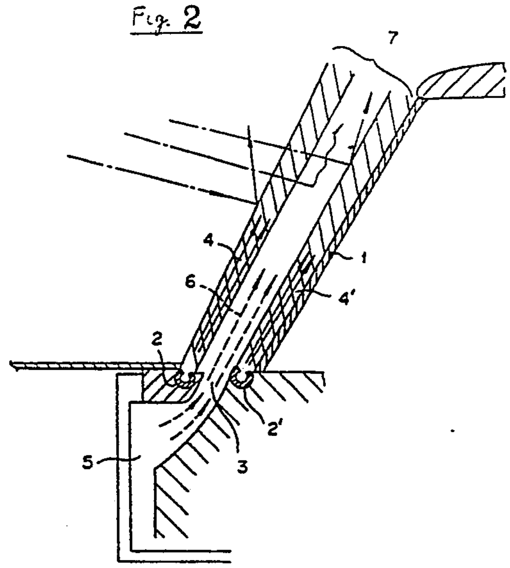


EP 0 377 746 A1

DESCRIPTION

# WINDOW CLEANER OF LAYERED JET STREAM SYSTEM

## TECHNICAL FIELD

This invention relates to a window cleaner of a layered jet stream system for preventing that safety is lowered, or a driver gets tired as a result of the fact that field of vision or view is obstructed by impingement of rain, snow, sand, or insects, etc. on the window section, or adhesion or attachment thereof to the window section in traveling or running of vehicles e.g. automobiles, streetcars, ships, or air-planes, etc. at the time of rainfall, snowfall or stormy wind.

## BACKGROUND ART

From the past, there has been generally popularized a window cleaning system to mount a wiper device having a wiper blade affixed to the front end of a wiper arm, on a front window or a rear window of vehicles such as automobiles, streetcars, ships, or air-planes, to allow the wiper blade to wipe the glass surface by a mechanical operation while being in contact with the glass surface by a pressure applied from the wiper arm to the wiper blade to thereby remove rain, snow, dust, or insects, etc. therefrom, thus to clean the window. Particularly, in the case of automotive vehicles, a wiper device of the type in which the wiper speed is adjustable at three stages in dependence upon the degree of a quantity of rainfall or a quality of snowfall is widely used.

However, since these wiper devices are of the system of effecting a wiper operation by the mechanical reciprocating or alternating motion of the wiper blade, they have the following drawbacks.

First, there are many instances where the reciprocating motion itself is limited to a circular locus, so only a portion of the window can be wiped. For this reason, the field of view which can be secured by wiping is limited to a relatively small area.

Secondly, since there would occur unwiped portions and/or uneveness in wiping due to degradation, hardening, or abrasion of a rubber portion of the wiper blade, there would arise a need to often exchange such a rubber portion as the article of consumption.

Thirdly, snow may adhere on the window surface or the wiper blade portion at the time of snowfall, so unwiped portion might occur, or snow to be removed is pressed together by the reciprocating motion of the wiper blade, with the result that snow removal may become impossible.

Fourthly, there are many instances where oily components or body fluids of insects or the like when they impinge on the front window are not completely removed by the reciprocating motion of the wiper blade. Thus, in the case of long time drive in the night, the window surface may be stained by insects or the like gathering towards a light of the front light, with the result that visual range is apt to become unsatisfactory.

Fifthly, at the time just after rain or the like, an automotive vehicle may be splashed by other vehicles with muddy water. It is likely that such a splashed muddy water is not completely removed by the reciprocating motion of the wiper blade, so the field of vision may become unsatisfactory.

Sixthly, there may be violent or heavy rainfall to such an extent that complete wiping is not carried out by the reciprocating motion of the wiper blade, such as squall or thunderstorm.

Seventhly, it may often take place that a driver feels uncomfortable by the frictional sound between the glass surface and the blade rubber portion, which is produced at the time of a light rain or snowfall, or a driver is subjected to eyestrain or nerve strain by the reciprocating motion of the wiper blade moving left and right within the field of vision.

To eliminate the problems as stated above, in accordance with this invention, the wiper blade, the wiper arm, and the like which are troublesome in operation are removed, and a jet layer of compressed air is instead provided on the window surface, thereby to blow off rain, snow, insects or the like, and/or dirty water, etc. before they impinge on the window surface to ensure a broad visual range at all times on the window surface, thus permitting vehicles such as automobile, etc. to run in safety and comfortably.

In this connection, there have been conventionally conducted, in various fields, studies of a window cleaner of the air injection system substituted for the wiper device of the mechanical means. However, it is difficult to ensure a reliable cleaning ability. If an attempt is made to realize this, there are technical problems that an extremely powerful injection pressure is required, and that an injected compressed air is affected by wind pressure during running of a vehicle, so its blowoff ability is reduced or changed to a great degree, with the result that it is impossible to maintain a cleaning ability constant at all times. At present the development of satisfactory devices has not reached a practically acceptable level.

To solve such technical problems, this invention contemplates allowing air injected onto the window surface to be in the form of a layered jet stream, thereby making it possible to ensure a stable cleaning ability at all times.

## DISCLOSURE OF THE INVENTION

The inventor of this invention employs a jet stream system as a basic concept to functionally divide a layer of an injected air stream into a jet layer having a role of principally shutting out the influence of an environmental gas and a jet layer having a role of principally cleaning the window surface, in order to reduce as small as possible the influence on such an injected air stream by the environmental gas, such as, wind pressure, etc. during running, which is a problem in the employment of the jet stream system, thus to provide these jet stream layers in a stacked manner with a predetermined spacing therebetween to carry out an overlapping injection.

When attention is drawn only to the cleaning of the window surface, if an attempt is made to blow off rain, snow, insects, or dirty water, etc. under condition of no wind and no wind pressure, a very powerful injection pressure is not required. However, the influence of an environmental gas such as wind pressure or wind produced when running as a vehicle is extremely large, and the faster the running speed of a vehicle is, the more powerful the wind pressure, etc. is. As a result, the cleaning action onto the window surface by the jet stream cannot be sufficiently ensured. In view of this, the inventor has employed a scheme to reduce or interrupt a pressure rendered by an environmental gas such as a wind pressure, etc. by the jet stream layer from which air is injected in the forward direction, and to allow a jet stream layer near the window surface to perform a cleaning action of the window surface. It is a matter of course that the strength of pressure of the jet stream layer for interruption of an environmental gas may be adjusted according to need, or such a layer may be formed as a multi-layer, etc. comprising a second layer and a third layer, etc.

Further, as the jet stream layer for cleaning the window surface, there may be a system of replacing the motion of a presently available wiper blade with a compressed injection air to change the jet stream direction so that it swings left and right, or may be a system of ejecting a uniform jet stream air layer over substantially the entirety of the window surface.

As a result, it has been confirmed that a cleaning action can be sufficiently ensured even in the case of high speed running. However, it has been found out that where a plurality of jet stream layers substantially parallel to each other are formed at predetermined intervals as stated above, if the interval is narrow, a reduced pressure phenomenon occurs, resulting in lowered pressure of the jet stream layer. This is because it is considered that air at the intermediate portion is blown up together with injected air as a result of the fact that it is drawn or pulled by air flowing on the side surfaces of the jet stream layers on both sides, so a vacuum is produced. As a result, the pressure of the jet stream layer itself is reduced by its sucking force. For preventing the pressure from being lowered, a scheme is adopted to eject a decompression preventive air flow of a lower speed into the portion between a plurality of compressed jet stream layers, i.e., to form a layered jet stream by providing a combined structure such that the decompression preventive air flow layers of a low speed is sandwiched between powerful compressed air jet stream layers.

Since employment of such a scheme allows the boundary portion of the layered stream to be stable, so no turbulent flow is produced, it has been confirmed that the layered jet stream is maintained and formed in a stable state.

In addition, it has been found that such a layered jet stream has a function to enhance the pressure of a large quantity of air by a small quantity of high pressure air on the basis of the principle of an air ejector, whereby a force resisting a pressure rendered by an environmental gas such as a wind pressure, or a force resisting rain, wind, snow or splashing muddy water becomes very strong. In view of this, the inventor of this invention has employed a scheme to artificially form a layered jet stream having such a characteristic on the surface portion of the window to thereby cover the surface of the window with the layered jet stream to conduct a cleaning thereof, thus preventing the window surface from being stained and removing rain, snow or stain adhering thereon.

Namely, the first invention for which patent is sought to be granted is directed to a window cleaner of a layered jet stream system comprising a compressed air injection nozzle and a secondary air ejection nozzle which are disposed at a peripheral edge of a window of a vehicle, or at a position in the vicinity thereof, wherein the compressed air injection nozzle is constructed to inject compressed air in the form of a plurality of layers located at predetermined intervals substantially parallel to the window surface to form a compressed jet stream layer, and wherein the secondary air ejection nozzle is constructed to eject air of a lower speed toward the portion between these compressed jet stream layers to form a secondary air stream layer.

The second invention for which patent is sought to be granted is directed to a window cleaner of a layered jet stream system comprising a compressed air injection nozzle and an open-air introduction/air injection opening which are disposed at a peripheral edge of a window of a vehicle or at a position in the vicinity thereof, wherein the compressed air injection nozzle is constructed to inject compressed air in the form of a plurality of layers located at predetermined intervals substantially parallel to the window surface, and wherein the open-air introduction/air ejection opening is constructed to eject therefrom air introduced from an open-air inlet of a vehicle substantially in parallel into the portion between the compressed jet stream layers to form an open-air stream layer.

The third invention for which patent is sought to be granted is directed to a window cleaner of a layered jet stream system as defined in the above-mentioned first and second inventions, wherein a heater or a hot air introduction opening is provided at a suitable portion, and wherein at least one of compressed jet stream layers formed by injecting compressed air in the form of a plurality of layers located at predetermined intervals substantially parallel to the window surface is formed by hot air.

## BRIEF DESCRIPTION OF THE DRAWINGS

Fig. 1 is an explanatory view showing an arrangement of an embodiment of a window cleaner of a layered jet stream system according to this invention, and

Fig. 2 is a longitudinal cross sectional view showing the principle of the window cleaner of the layered jet stream system shown in Fig. 1 and how the layered jet stream covers the window.

BEST MODE FOR CARRYING OUT THE INVENTION

This invention will be described in detail in accordance with an embodiment shown. Fig. 1 is an explanatory view of the entire arrangement of a window cleaner according to this invention.

As shown in this figure, compressed air injection nozzles 2 and 2' are provided at the peripheral edge of a front window surface 1 or at a position in the vicinity thereof, and an open-air introduction/air ejection opening 3 is disposed substantially in parallel with the front window surface 1 between both compressed air injection nozzles 2 and 2'. More particularly, in this embodiment, there is shown an arrangement including two columns of compressed air injection nozzles 2 and 2' which are spaced by about 5 cm, and one column of open-air introduction/air ejection opening 3 provided therebetween. In addition, there may be employed an arrangement including a suitable increased number of columns of compressed air injection nozzles 2 and 2', e.g., three or four columns threof, etc., and a plurality of columns of open-air introduction/air ejection openings 3 interchangeably provided therebetween. In accordance with this arrangement, compressed air is injected in the form of a plurality of layers with a predetermined spacing therebetween substantially parallel with the window surface 1 from the respective compressed air injection nozzles 2 and 2' to form compressed jet stream layers 4 and 4'. In addition, air introduced from an open-air inlet 5 of an automotive vehicle is ejected from the open-air introduction air ejection hole 3 into the portion between the compressed jet stream layers 4 and 4' to form an open-air stream layer 6. By the compressed jet stream layers 4 and 4' respectively ejected and formed from the compressed air injection nozzles 2 and 2' and the open-air stream layer 6 ejected from the open-air introduction/air ejection opening 3, a layered jet stream 7 is formed. Namely, the layered jet stream 7 is formed by using the compressed jet stream layers 4 and 4' and the open-air stream layer 6 as a drive jet stream and a secondary jet stream, respectively.

By formation of this layered jet stream 7, the following experimental result is obtained. The compressed jet stream layer 4 injected from the forward compressed air injection nozzle 2 weakens wind pressure during running, and rain, snow, insects, or splashing water, etc.

are blown up at a stroke by the compressed jet stream layer 4' injected from the compressed air injection nozzle 2 closer to the window surface 1. This eliminates the possibility that rain, snow, insects, splashing water,etc. may impinge on the window surface.

With respect to setting of an injection air pressure of the compressed air injection nozzles 2 and 2', various air pressures may be obtained by varying the inner diameter of the air introduction pipe. In this invention, setting is made such that the final injection pressure of the compressors 10 and 10' is equal to 15 $kg/cm^2$ at the maximum (the maximum injection pressure is equal to 10 $kg/cm^2$). The reason thereof is as follows. According to an experiment by the inventor, under condition where there is little wind, when an automotive vehicle runs at 20 km/h (speed per hour), the wind pressure was equal to 1 $kg/cm^2$; when it runs at 60 km/h (speed per hour), the wind pressure was equal to 5 $kg/cm^2$; when it runs at 80 km/h (speed per hour), the wind pressure was equal to 7.5 $kg/cm^2$; and when it runs at 150 km/h (speed per hour), the wind pressure was equal to 10 $kg/cm^2$. It has been made known from the above result that it is sufficient that a required nozzle injection air pressure is equal to about 5 $kg/cm^2$ to 7.5 $kg/cm^2$, resulting in no possibility that rain or snow reaches the window surface 1 at a running speed of ordinary automotive vehicles.

In the embodiment, open-air introduction/air ejection opening 3 is provided and open-air is ejected as an open-air stream layer towards the portion between compressed jet stream layers 4 and 4'. There may occur instances where the pressure of open-air introduced is too weak in a stopped state or at the time of low speed running, so a quantity of jet stream and/or a jet stream pressure of the open-air stream layer 6 are not sufficient, or there may conversely occur instances where the pressure of an open-air introduced is too strong at the time of high speed running. To prevent such an unbalance, an arrangement may be of course employed to provide a secondary air ejecting nozzle for adjustment to eject an air having a speed lower than that of the compressed jet stream layer 4, thus to form a secondary air stream layer. Since there are instances where the pressure of an open-air stream layer ejected from the open-air introduction/air ejection opening is stronger than that of the compressed jet stream layer 4, in contrast with the above, in the case of high speed running, an approach may be employed to adjust compressed air injection nozzles 2 and 2' to reverse the pressure relationship between the drive jet stream and the secondary jet stream.

In a window cleaner of the layered jet stream system, there may be employed an arrangement such that a heater or a hot air introduction unit is provided wherein at least one compressed jet stream layer (e.g., the compressed air layer 4' injected from the compressed air injection nozzle 2' closer to the window surface 1) of compressed air injected in the form of a plurality of layers with a predetermined spacing therebetween substantially parallel to the window surface 1 from the compressed air injection nozzles 2 and 2' is formed by hot air, to thereby thaw frozen material on the window surface at the time of cold to blow moisture off.

The arrangement shown in Fig. 1 includes a non-stepwise switch 8, motors 9 and 9', air compressors 10 and 10', and air pressure doubling devices 11 and 11'.

The operation of the window cleaner thus constructed will now be described with reference to Fig. 1. When motors 9 and 9' are rotated by the activation of the non-stepwise switch 8, the air-compressors 10 and 10' become operative. Thus, air introduced is guided to the air pressure doubling devices 10 and 10'. The pressure-doubled air is fed into rod-shaped compressed air injection nozzles 2 and 2' provided in parallel at the front and lower portion of the front window surface 1. The compressed air injection nozzles 2 effect a flow injection from the central portion towards left and right directions, and the compressed air injection nozzles 2' effect a flow injection from the left and right directions towards the central portion. Thus, these nozzles 2 and 2' allow the front portion of the window surface to be covered with compressed air to block or cut off incoming of rain, snow, insects, muddy water, etc. At this time, a decompression phenomenon occurs between the compressed jet stream layers 4 and 4', resulting in a lowered pressure of the jet stream layer. It is considered that this is because air at the intermediate portion is blown up together with injection air as a result of the fact that it is drawn out by air flowing on the side surfaces of the compressed jet stream layers 4 and 4' on both sides, giving rise to vacuum. To prevent occurrence of such a pressure lowered state, a measure is taken to eject a decompression preventive air stream of a lower speed between a plurality of layered compressed jet stream layers, i.e., to combine powerful compressed air jet stream layers with a decompression preventive air stream layer in a manner that the latter layer is sandwiched between the former layers to form a layered jet stream. Such a layered jet stream enhances pressure of a great quantity of air by a small quantity of high pressure air on the basis of the principle of the air ejector, thereby making it possible to powerfully and efficiently prevent a pressure rendered by an environmental gas, such as, wind pressure, or impingement onto the window surface of rain, snow, wind, splashing muddy water, etc. In addition, even if rain, snow, wind, or splashing muddy water, etc. might break through the layered jet stream to impinge on the window surface, such an obstacle is blown off immediately and is cleaned, thus making it possible to ensure a broad field of vision on the window surface.

## INDUSTRIAL APPLICABILITY

As stated above, a window cleaner of a layered jet stream system according to this invention comprises a compressed air injection nozzle and a secondary air ejection nozzle or an open-air introduction/air ejection opening provided at the peripheral edge of a window of a vehicle or at a position in the vicinity thereof, wherein the compressed air injection nozzle is constructed to inject compressed air in the form of a plurality of layers located at predetermined intervals substantially in parallel with the window surface to form a plurality of compressed jet stream layers, and wherein the secondary air ejection nozzle or open-air introduction/air ejection opening is constructed to eject air toward the portion between these compressed jet stream layers to form a secondary air stream layer to combine the compressed jet stream layers and the secondary air stream layer to constitute a layered jet stream. Namely, this invention is directed to a window cleaner of a layered jet stream system constructed to combine the drive jet streams and the secondary jet stream in a layered manner to form a layered jet stream to cover the window surface with such a layered jet stream.

Since this layered jet stream has a strong pressure and serves to exhibit a strong force in blowing off wind, rain, snow, insects, or splashing muddy water, etc., it can prevent such an obstacle from impinging on the window, or can momentarily eliminate such an obstacle even if this obstacle impinges thereon. In addition, even if such a layered jet stream undergoes a wind pressure at the time of high speed running of a vehicle, the function of the layered jet stream can be sufficiently maintained. Thus, this window cleaner of the layered jet stream system can perform a cleaning ability in place of conventional wiper devices to mechanically carry out a wiping to make a cleaning. In the case of snow or ice, etc., if hot air is used as air to be ejected, the effect of the removing/cleaning operation is still more ensured.

As a result, this window cleaner of the layered jet stream system has been able to improve a troublesomeness such that reciprocating motion is conducted within the field of vision, a narrow field of vision resulting from the fact that the cleaning range is partially specified, incompleteness of cleaning work, and the like, which were encountered with conventional wiper devices.

CLAIMS

1. A window cleaner of a layered jet stream system comprising a compressed air injection nozzle and a secondary air ejection nozzle provided at a peripheral edge of a window of a vehicle or at a position in the vicinity thereof, wherein said compressed air injection nozzle is constructed to inject compressed air in the form of a plurality of layers located at predetermined intervals substantially parallel with the window surface to form a plurality of compressed jet stream layers, and wherein said secondary air ejection nozzle is constructed to eject air of a lower speed toward the portion between said compressed jet stream layers to form a secondary air stream layer.

2. A window cleaner of a layered jet stream system comprising a compressed air injection nozzle and an open-air introduction/air ejection opening provided at a peripheral edge of a window of a vehicle or at a position in the vicinity thereof, wherein said compressed air injection nozzle is constructed to inject therefrom compressed air in the form of a plurality of layers located at predetermined intervals substantially parallel with the window surface to form a plurality of compressed jet stream layers, and wherein said open-air introduction/air ejection opening is constructed to eject therefrom air introduced from an open-air inlet of a vehicle toward the portion between said compressed jet stream layers, a layered jet stream being formed by the compressed jet stream layers ejected and formed from said compressed air injection nozzle and the open-air stream layer ejected from said open-air introduction/air ejection opening.

3. A window cleaner of a layered jet stream system as set forth in claim 1 or 2, wherein a heater or a hot air introduction portion is provided at a suitable portion, at least one of the compressed jet stream layers of compressed air injected from said compressed air injection nozzle in the form of a plurality of layers located at predetermined intervals substantially parallel with the window surface being formed by hot air.

Fig. 1

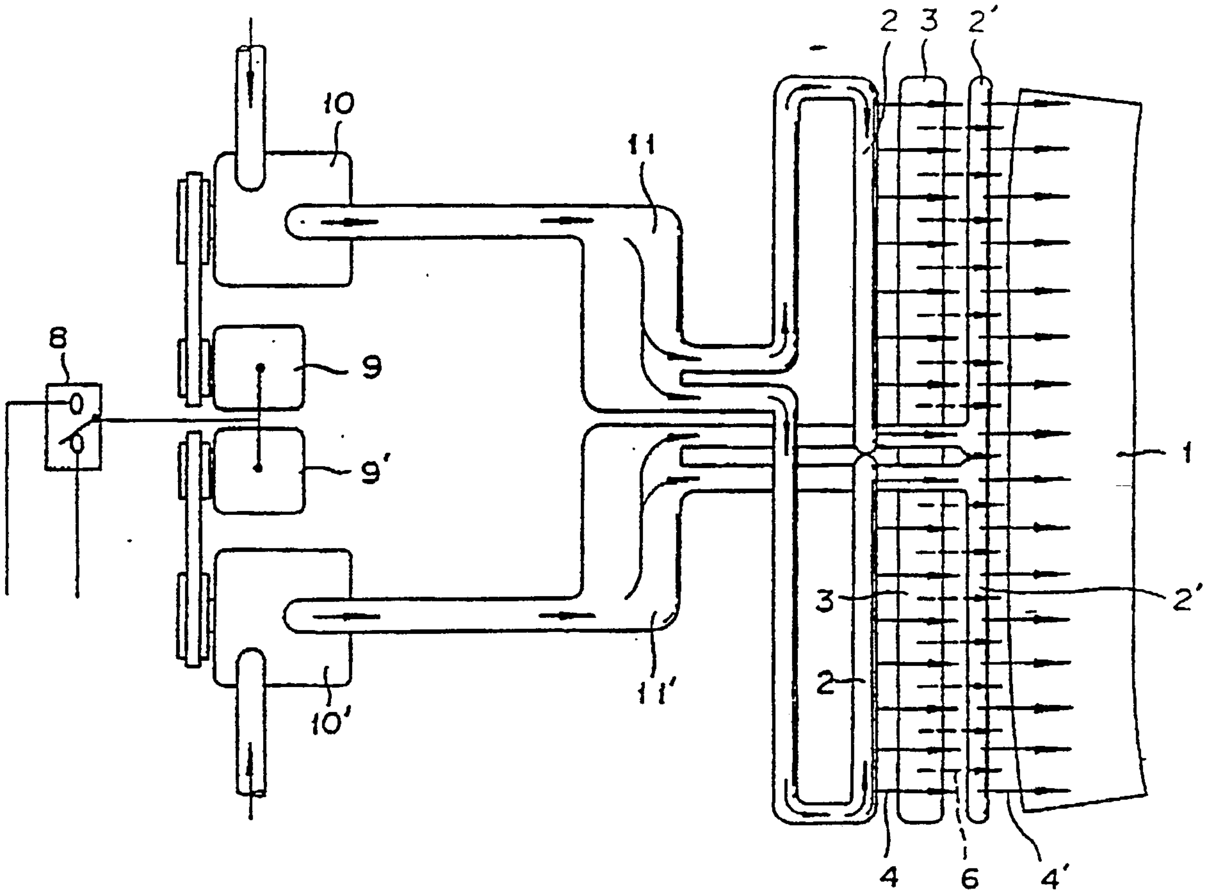

Fig. 2

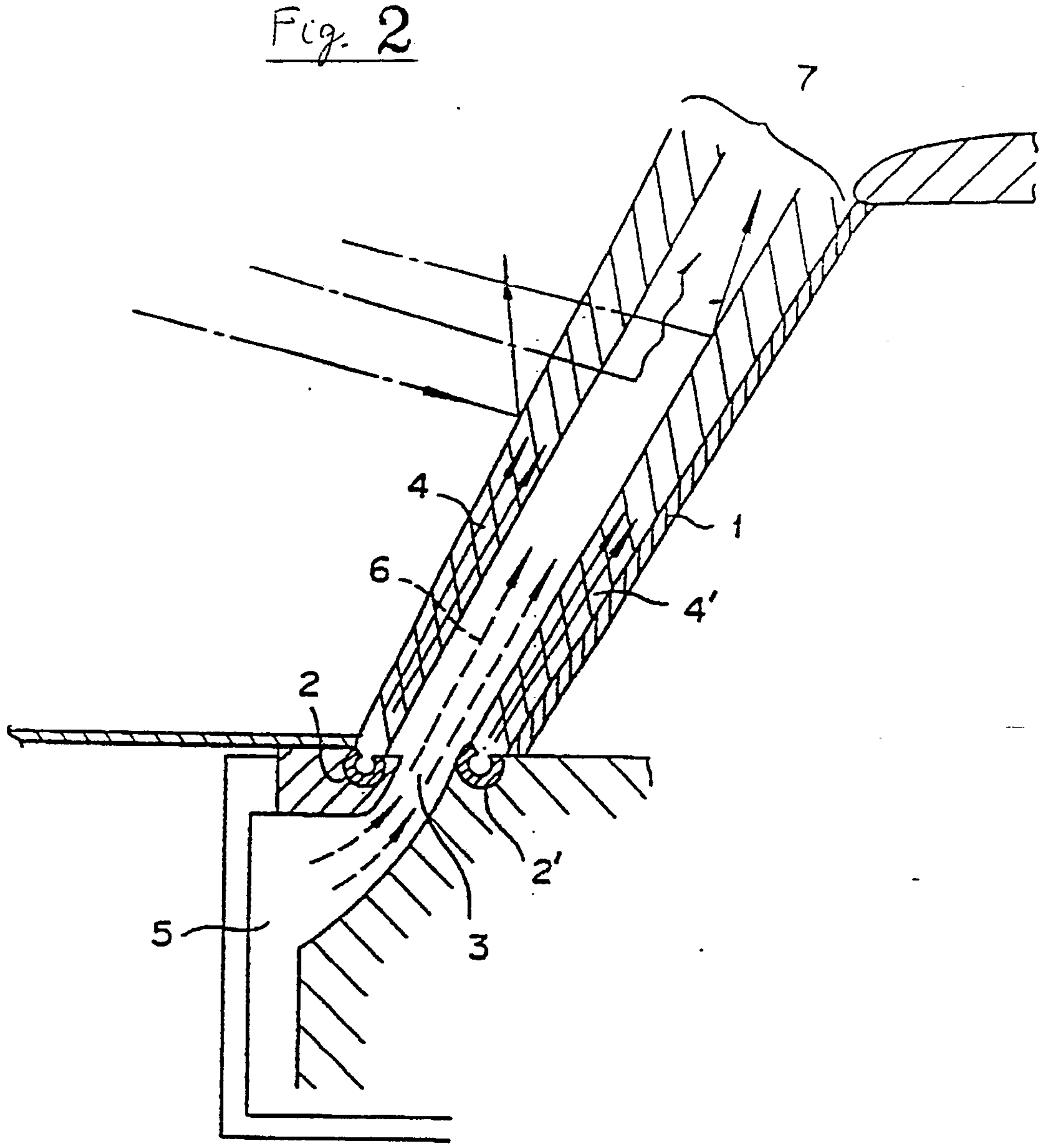

# INTERNATIONAL SEARCH REPORT

International Application No PCT/JP89/00477

**I. CLASSIFICATION OF SUBJECT MATTER** (if several classification symbols apply, indicate all) [6]

According to International Patent Classification (IPC) or to both National Classification and IPC

Int. $Cl^4$
B60S1/54

**II. FIELDS SEARCHED**

Minimum Documentation Searched [7]

| Classification System | Classification Symbols |
|---|---|
| IPC | B60S1/54 |

Documentation Searched other than Minimum Documentation to the Extent that such Documents are Included in the Fields Searched [8]

| | |
|---|---|
| Jitsuyo Shinan Koho | 1926 - 1989 |
| Kokai Jitsuyo Shinan Koho | 1971 - 1989 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, Y1, 43-15048 (Yamanaka Shoichi) 24 June 1968 (24. 06. 68) (Family : none) | 1 - 3 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| August 1, 1989 (01. 08. 89) | August 21, 1989 (21. 08. 89) |
| **International Searching Authority** | **Signature of Authorized Officer** |
| Japanese Patent Office | |